# EUROPÄISCHE PATENTSCHRIFT

(11) **EP 1 129 838 B1**
(45) Veröffentlichungstag und Bekanntmachung des Hinweises auf die Patenterteilung: **08.10.2008**
(21) Anmeldenummer: 00126159.3
(22) Anmeldetag: 30.11.2000
(51) Int. Cl.: B29C 49/42, B29C 49/22, B29C 47/22, B29C 49/04

(54) **Vorrichtung zum Herstellen von hohlkörperförmigen Artikeln aus thermoplastischem Kunststoff durch Saugblasen**
Apparatus for producing hollow articles made of thermoplastic material by suction and blowing
Dispositif pour fabriquer des articles de forme creuse en matière thermoplastique par aspiration et soufflage

(30) Priorität: 21.02.2000 DE 10007870
(43) Veröffentlichungstag der Anmeldung: 05.09.2001
(73) Patentinhaber: Kautex Maschinenbau GmbH, 53229 Bonn (DE)
(72) Erfinder: Hilgers, Heinz-Dieter, 53842 Troisdorf (DE); Schuller, Frank, 50226 Frechen (DE)
(74) Vertreter: Grosse, Wolf-Dietrich Rüdiger

(56) Entgegenhaltungen:
- EP-A- 0 400 339
- EP-A- 0 468 261
- US-A- 2 957 201
- US-A- 5 932 166

## Beschreibung

Die Erfindung betrifft ein Verfahren zum Herstellen von hohlkörperförmigen Fertigartikeln aus thermoplastischem Kunststoff durch Saugblasen, umfassend ein aus zwei in eine Offen- und in eine verriegelbare Schließstellung bewegbaren Formhälften bestehendes Werkzeug, dem zumindest unten ein die Artikelkavität verschließender Schieber zugeordnet ist, eine unten an das Werkzeug angeschlossene Saugvorrichtung und mindestens einen Extrusions- bzw. Coextrusionskopf, der einen aus zwei konzentrisch zueinander angeordneten Kunststoffschläuchen bestehenden Vorformlingsschlauch bereitstellt, wie durch die US-A-5 932 166 bekannt geworden.

Aus der EP-A-0 400 339 ist ein für Verfahren zum Herstellen von einen mehrschichtigen Wandaufbau besitzenden Schläuchen bekannter Bereitstellungs- bzw. Schlauchkopf zu entnehmen. Dieser ist mit jeweils einer Düse für den Innenschlauch und einer Düse für den Außenschlauch mit zueinander konzentrischen Düsenmündungen ihrer Ringkanäle und für jede Düse unabhängig voneinander betätigbaren Düsenspalt-Verstellungsmitteln zur Veränderung des Querschnitts der Ringkanäle versehen, wobei die innere Düse einen Außendurchmesser besitzt, der einen Innenschlauch bildet, welcher auf den engsten Querschnitt der Saugblasform abgestimmt und damit im Durchmesser kleiner ist als der kleinste Durchmesser des durch die Saugblasform hindurchgeführten Vorformlings und die äußere Düse einen Innendurchmesser aufweist, der größer ist als der Außendurchmesser der inneren Düse. Es werden schon unmittelbar in dem Schlauchkopf selbst mehrere ringförmige Materialströme zu einem Schlauch zusammengeführt. Eine der Schichten dieses mehrschichtigen Schlauches besteht aus einem Verstärkungsmaterial, welches somit schon gleich im Schlauchkopf von zwei oder mehreren Kunststoffschichten ummantelt wird.

Beim Saugblasverfahren, wie beispielsweiseebenfalls bekannt aus "Technische Mitteilungen Krupp" 2/1998, Seiten 49 bis 51, wird der Vorformlingsschlauch unmittelbar oder gegebenenfalls unter Zwischenschaltung eines Schlauchzubringers aus dem Extrusions- bzw. Coextrusionskopf - im folgenden Bereitstellungskopf genannt - in das geschlossene Werkzeug extrudiert bzw. durch das geschlossene Blaswerkzeug gesaugt, wobei er auf einem von der werkzeugunterseitig angeordneten Saugvorrichtung erzeugten Luftpolster in die Endposition gleitet. Nach dem Schließen beginnt dann der eigentliche Blasvorgang. Eine Saugblasmaschine bietet gegenüber den konventionellen Blasformmaschinen, wie durch die DE 37 22 340 A1 bekanntgeworden, mehrere Vorteile. Da der Vorformlingsschlauch in das geschlossene Blaswerkzeug eingesaugt wird, können keine unerwünschten Abquetschungen auftreten. Die Saugblasartikel haben folglich keine Schweißnähte, so daß die Schließkraft im wesentlichen lediglich zum Zuhalten des Blaswerkzeuges gegen die durch den Blasdruck der Saugvorrichtung aufgebauten Kräfte benötigt wird. Für die Schließeinheit ergibt sich damit ein deutlich niedrigerer Energieverbrauch, wie auch eine aufwendige Schließregelung mit Positions- und Geschwindigkeitsregler entfällt, die bei den bekannten Blasformmaschinen ansonsten verfahrenstechnisch für eine optimale Schweißnahtausbildung notwendig sind.

Beim vom Saugblasen abweichenden Blasformen ist aus der US 4 717 326 ein Extrusionskopf zur Herstellung eines Vorformlings aus mehreren Kunststoffschmelzen nach dem diskontinuierlichen Coextrusionsverfahren bekannt. Die Zufuhr der Hauptschmelze erfolgt mittels eines kontinuierlich arbeitenden Extruders über ein Verteilerelement in einen im Kopf integrierten Speicherraum mit vertikal angeordneten Speicherkolben. Der Kopf weist für alle weiteren Schmelzen Einspeisestellen mit horizontal verlaufenden Fließwegen auf, wobei die Schmelze außerhalb des Kopfgehäuses gespeichert wird. Nach dem im Stand der Technik beschriebenen Coextrusionsverfahren wird die Hauptschmelze mittels eines Stegdomhalters in eine äußere und eine innere Teilschicht aufgeteilt, und während des Trennungsprozesses werden dort die weiteren Schmelzen als Sperrschichtpolymer oder als Verbindungspolymer zwischen die beiden Hauptschichten eingespritzt. Durch die Auslagerung der Speicherung dieser Hilfspolymere in Bereiche außerhalb des Hauptkopfes lassen sich die Kunststoffschmelzen hinsichtlich ihrer Temperatur mittels entsprechender Temperatursteuerungsmittel kontrollieren.

Beim Saugblasen, das wegen des diskontinuierlichen Betriebes in der Regel einen Speicherkopf erfordert, weil der Vorformlingsschlauch so schnell (wenige Sekunden) ausgestoßen werden muß, wie es das anschließende Saugblasen erfordert, treten weitere, große Probleme dann auf, wenn bei dem herzustellenden Fertigartikel an verschiedenen Stellen unterschiedliche Wandstärken vorliegen sollen. An diesen Stellen wird der Vorformlingsschlauch mit einer größeren Wanddicke durch Variation der Vorformlingswandstärke und somit auch des Außen- und Innendurchmessers des Außenschlauches ausgebildet. Der von dem Fertigartikel und der entsprechend ausgelegten Kavität der Saugblas-Werkzeugform vorgegebene engste Querschnitt, z.B. 10 mm, kann hingegen nicht verändert werden. Durch die bekannte Coextrusion mit Verstärkung des Innenschlauches durch den Außenschlauch in der Düse an einer gemeinsamen Stelle läßt sich bei im Durchmesser kleinen Düsen nicht ausschließen, daß sich der Innendurchmesser des Innenschlauches verschließt, so daß ein für das Saugblasen nicht mehr geeigneter Vollstrang vorliegt, der in der Saugblasform zu einem Blockieren führt. Der Grund für dieses Verschließen des Innenschlauches liegt darin, was zahlreiche Versuche bestätigt haben, daß bei plötzlicher Aufextrusion in der gemeinsamen Düse eine Quellung bzw. ein Schwellen und damit Zuwachsen des Innendurchmessers bewirkt wird. Dieses unvermeidliche Schwellen ist ein Relaxieren der im ausgestoßenen Kunststoffmaterial ohnehin vorhandenen Spannungen, wenn der im Schmelzekanalbereich weiterhin auch noch Scherkräften der Düsenwandung auf die Schmelze ausgesetzte Schlauch ins Freie tritt. Das Relaxieren führt zum Spannungsabbau und zum Durchmesserschwellen durch Verdickung der Strangwandung auch nach innen. Dies läßt sich auch durch Stützluft wegen des dann gestörten Schlauchdurchsaugprozesses im Saugblasverfahren nicht verhindern.

Der Erfindung liegt daher die Aufgabe zugrunde, ein Verfahren der eingangs genannten Art so weiter auszubilden, daß beim Saugblasen, insbesondere auch eines Artikels mit extrem großem Reckwegunterschied, ein Schwellen bzw. Verschließen eines einen kleinen Innendurchmesser aufweisenden Innenschlauches bei der Aufextrusion eines äußeren Schlauches vermieden werden kann.

Diese Aufgabe wird erfindungsgemäß mit den im kennzeichnenden Teil des unabhängigen Anspruchs angegebenen Merkmalen gelöst. Dieser Lösung liegt die kenntnis zugrunde, daß bei zwei im Bereitstellungskopf ausgebildeten Düsen mit diesen zugehörigen Düsenspaltverstellungsmitteln einerseits eine Wanddickensteuerung für die auf einem bestimmten Längenabschnitt über den gesamten Umfang des Innenschlauches aufzubringende Verstärkung durch den Außenschlauch möglich ist. Andererseits läßt sich das Aufbringen dieser Verstärkung auf den von der inneren Düse, die auf dem engsten Querschnitt der Saugblasform abgestimmt ist, erzeugten Innenschlauch außerhalb der Düsenmündung verlagern, so daß es nicht mehr zu einem Verschließen des Innenstranges kommen kann. Das Aufbringen der Verstärkung kann nämlich zu einem Zeitpunkt nach dem Austritt der Kunststoffstränge aus den jeweiligen Düsen, d.h. unterhalb der Düsenmündungen verlegt werden. Dieser Abstand kann aufgrund der Eigenschaften der jeweiligen Materialien sowie der Schlauchdurchmesser ohne weiteres bestimmt werden. Um bereichsweise sehr dünne und gleichzeitig im Durchmesser große sowie dort gegebenenfalls auch dickwandige Abschnitte aufweisende Fertigartikel herzustellen, bedarf es somit keiner Fertigung aus mindestens zwei Teilen mehr, wie bisher üblich.

Weitere Einzelheiten und Vorteile der Erfindung ergeben sich aus dem Patentanspruch und der nachfolgenden Beschreibung eines in den Zeichnungen sehr schematisch dargestellten Ausführungsbeispiels des Gegenstandes der Erfindung.
Es zeigen:
- Fig. 1: als Einzelheit einer weiter nicht gezeigten Saugblas-Formmaschine deren geöffnetes Werkzeug mit darüber angeordnetem Bereitstellungskopf, vor der Entnahme des fertigen Artikels aus dem geöffneten Werkzeug;
- Fig. 2: eine Prinzipdarstellung des Verhaltens des Kunststoffs bei zwei im Kopf zusammengeführten Schlauchsträngen;
- Fig. 3: im Bereich des Austrittsendes der Schläuche einen mit zwei Düsen ausgebildeten Bereitstellungskopf; und
- Fig. 4: als Teilansicht das Kopfende mit Verstellung der Spalte der beiden Düsen.

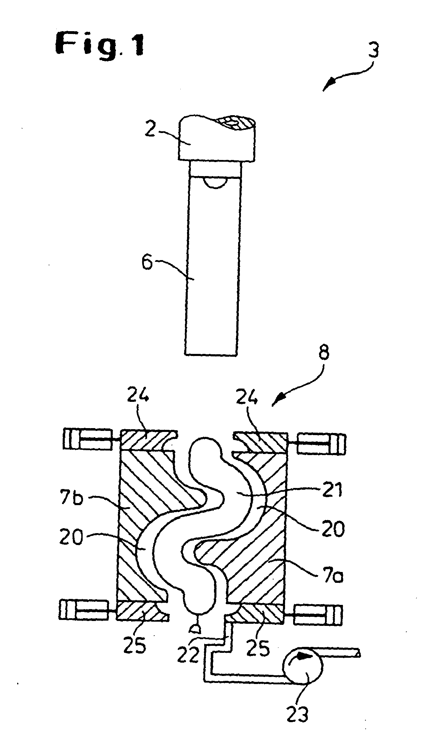

Eine in ihrer Gesamtheit in Fig. 1 nicht dargestellte Saugblas-Formmaschine 3 umfaßt einen Bereitstellungskopf 2, dem das zur Herstellung des sauggeblasenen Hohlkörpers benötigte aufbereitete Kunststoffmaterial bekanntermaßen mittels Extruder und Verteiler zugeleitet wird. Der Bereitstellungskopf 2 gibt die für das Saugblasverfahren benötigten Vorformlinge in Form von Schlauchabschnitten 6 in ein aus zwei Formhälften 7a, 7b bestehendes Werkzeug 8 ab, das zur Aufnahme des Vorformlingsschlauches 6 mit einer Artikelkavität 20 ausgebildet ist. Die Formhälften 7a, 7b des Werkzeuges 8 sind in einer von Schließzylindern beaufschlagbaren, nicht gezeigten Schließeinheit angeordnet.

Das Saugblasen wird anhand des in Fig. 1 dargestellten Werkzeugs 8 näher beschrieben, das dort allerdings bereits mit geöffneten Werkzeugen 7a, 7b zur Entnahme des fertigen Artikels 21 gezeigt ist. Zur Aufnahme eines neuen Vorformlings nach der Fertigartikel-Entnahme wird die Blasform bzw. das Werkzeug 8 geschlossen. Eine von unterhalb mittels eines Adapters 22 an das Werkzeug 8 angeschlossene Saugvorrichtung 23 wird eingeschaltet. Ergänzend zu dem damit einsetzenden Ansaugen des neu zugeführten Vorformlings 6 kann Vorblasluft in den Vorformlingsschlauch 6 eingeblasen werden. Sobald die im Ausführungsbeispiel an der Ober- und der Unterseite des Werkzeugs 8 angeordneten Schieber 24 bzw. 25 zum Verschließen der Artikelkavität 20 zugefahren wurden, wird die Vorblasluft ausgeschaltet und das Ausformen des Vorformlingsschlauches 6 zu dem fertigen Artikel 21 mittels Blasluft über Blasnadeln oder Blasdorne der Saugvorrichtung 23 bewirkt. Wenn der Fertigartikel 21 ausgeformt und abgekühlt ist, werden die Formhälften 7a, 7b wie gemäß der Darstellung in Fig. 1 geöffnet, so daß der Fertigartikel 21 zur Entnahme, beispielsweise mittels eines Entnahmegreifers oder einer Maske, freiliegt. Von dort kann der Fertigartikel 21 in Nachfolgestationen, z.B. zum Stanzen und zum Nachkühlen, weitertransportiert werden.

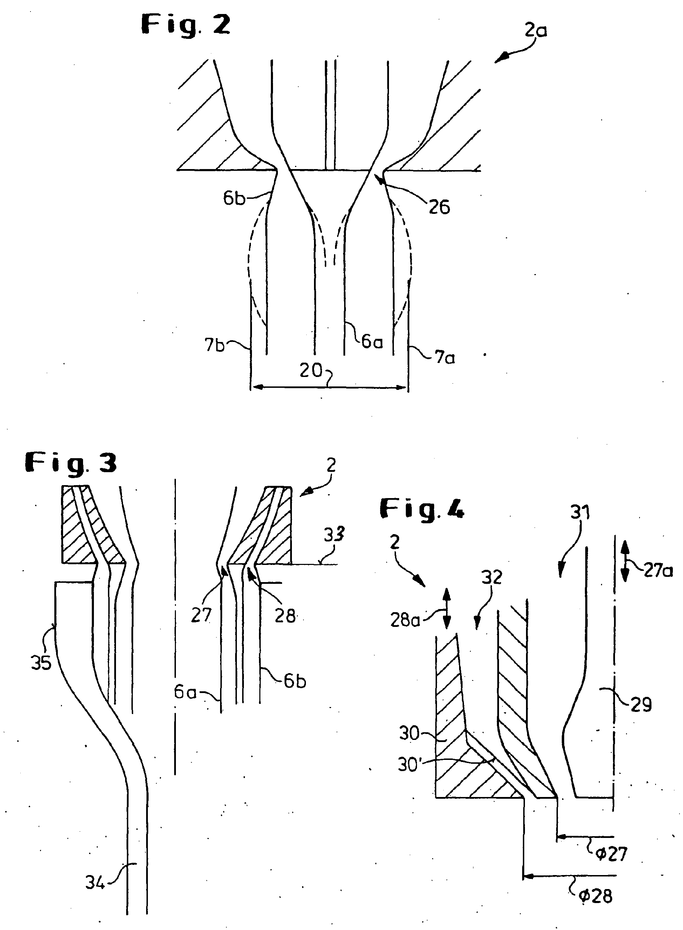

Das Herstellen eines Fertigartikels, der bereichsweise sehr dünn ist und an einem Ende einen relativ großen Durchmesser und an dieser Stelle möglicherweise auch dickwandigen Abschnitt besitzt, mittels Saugblasformung erfordert einen Vorformlingsschlauch 6 mit extrem großem Reckwegunterschied. Wenn der Vorformlingsschlauch mit einem in Fig. 2 dargestellten, herkömmlichen Bereitstellungskopf 2a hergestellt wird, indem ein Innenschlauch 6a von - für die dünnen Bereiche benötigten - kleinem Durchmesser abschnittsweise mit einem Außenschlauch 6b von entsprechend größerem Durchmesser verstärkt wird, tritt bei der gezeigten Aufextrusion des Außenschlauches 6b mit Coextrusion in der Düse 26 an einer gemeinsamen Stelle ein jeweils durch Strichelung verdeutlichtes Schwellen aufgrund des sich relaxierenden Kunststoffmaterials auf. In dem bereits sehr engen inneren Kanal des Innenschlauches 6 führt das zu einem Verschließen, so daß kein Schlauch mehr vorliegt, sondern ein Vollstrang. Außerdem tritt ein Schwellen des Außenschlauches 6b nach außen auf. Es ist dann weder möglich, daß die Stütz- bzw. Saugblas-Luftzufuhr wirksam werden kann, noch läßt sich aufgrund der äußeren Quellung ein solcher Vorformlingsschlauch in den Querschnitt der Artikelkavität 20 einlegen bzw. der Vorformling läßt sich nicht mehr Blasformen.

Diese Nachteile werden mit dem in den Fig. 3 und 4 gezeigten Bereitstellungskopf 2 vermieden. Dieser ist mit jeweils einer Düse 27 für den Innenschlauch 6a und einer äußeren Düse 28 für den als Verstärkung bereichsweise aufzubringenden Außenschlauch 6b ausgebildet. Den beiden Düsen 27 bzw. 28 sind zur Steuerung der Wanddicke des jeweiligen Schlauches zudem durch Doppelpfeile schematisch gekennzeichnete Stellmittel 27a bzw. 28a zugeordnet, die unabhängig voneinander betätigbar sind und mit denen sich durch Anheben bzw. Absenken der entsprechenden Kopfwandteile 29 bzw. 30 die Ringkanäle 31 bzw. 32 für den Innenschlauch 6a bzw. den Außenschlauch 6b im Bereich ihrer Austrittsmündungen veränderlich einstellen lassen, wobei sich das Kopfwandteil 30, wie durch die Position 30' in Fig. 4 angedeutet, so verstellen läßt, daß die Düsenmündung des Ringkanals 32 völlig geschlossen ist, und zwar dann, wenn ein Abschnitt des inneren Schlauches 6a nicht verstärkt werden soll.

Die beiden Düsen 27, 28 des Bereitstellungskopfes 2 gestatten es im Zusammenspiel mit den Stellmitteln 27a, 28a, das Ausstoßen der Schläuche so zu bewirken, daß der zur bereichsweisen Verstärkung aufgebrachte äußere Schlauch 6b erst im Abstand unterhalb der Düsenmündungen 33 (vgl. Fig. 3) mit dem Innenschlauch 6a zusammenfließt. Dieses Verstärken des Innenschlauches 6a geschieht damit zu einem Zeitpunkt unterhalb des Bereitstellungskopfes 2, zu dem kein nachteiliges, den Durchmesser des Innenschlauches 6a verschließendes Quellen des Kunststoffmaterials mehr auftritt. Die Durchmesser von innerer und äußerer Düse 27 bzw. 28 sind hierbei so abgestimmt, daß der Außendurchmesser des Innenschlauches 6a stets kleiner ist als der Innendurchmesser des Außenschlauches 6b (vgl. Fig. 4). Es läßt sich somit durch Saugblasen ein Fertigartikel 34 herstellen, der bereichsweise sehr dünn ist und an einer anderen Stelle 35 - wie in Fig. 3 verdeutlicht - einen relativ großen Durchmesser und gegebenenfalls auch dickwandigen Abschnitt aufweist.

## Patentansprüche

1. Verfahren zum Herstellen von hohlkörperförmigen Fertigartikeln (34) aus thermoplastischem Kunststoff durch Saugblasen, umfassend ein aus zwei in eine offen- und in eine verriegelbare Schließstellung bewegbaren Formhälften (7a, 7b) bestehendes Werkzeug (8), dem zumindest unten ein die Artikelkavität (20) verschließender Schieber (24, 25) zugeordnet ist, eine unten an das Werkzeug (8) angeschlossene Saugvorrichtung (23 und mindestens einen Bereitstellungskopf (2) der einen aus zwei konzentrisch zueinander angeordneten Kunststoffschläuchen (6a; 6b) bestehenden Vorformlingsschlauchs (6) bereitstellt, **dadurch gekennzeichnet daß** der Bereitstellungskopf (2) mit jeweils einer Düse (27) für den Innenschlauch (6a) und einer Düse (28) für den Außenschlauch (6b) mit zueinander konzentrischen Düsenmündungen (3) ihrer Ringkanäle (31, 32) und für jede Düse (27, 28) unabhängig voneinander betätigbaren Düsenspalt Verstellungsmitteln (27a, 28a) zur wandickensteuerung ist, die innere Düse (27) einen Innenschlauch (6a) bildet, welcher auf den engsten Querschnitt der Saugblasform abgestimmt und die äußere Düse (28) einen Innendurchmesser aufweist, der stets größer ist als der Außendurchmesser der inneren Düse (27), wobei erst im Abstand unterhalb der Düsenmündungen (33) der Ringkanäle (31, 32) der durch die äußere Düse (28) extrudierte Außenschlauch (6b) zur Verstärkung der Wanddicke des Innenschlauchs (6a) über dessen gesamten Umfang auf einem bestimmten Längenabschnitt mit dem Innenschlauch (6a) zu dem hohlkörperförmigen Fertigartikel (34) verbunden wird.

## Claims

1. A method for manufacturing hollow-shaped finished articles (34) consisting of thermoplastic material by means of vacuum blowing, comprising a tool (8) which consists of two mould halves (7a, 7b) which can be moved into an open position and a lockable closed position, and which is assigned at least at the bottom a slider (24, 25) which closes the article cavity (20), a suction device (23) which is connected to the bottom of the tool (8), and at least one provision head (2) which provides a pre-formed tube (6) which consists of two concentrically arranged plastic tubes (6a; 6b), **characterised in that** the provision head (2) is provided with in each case one nozzle (27) for the inner tube (6a) and one nozzle (28) for the outer tube (6b) with concentric nozzle openings (3) to their annular ducts (31, 32) and nozzle gap adjustment means (27a, 28a) for controlling the wall thickness for each nozzle (27, 28), which means can be actuated independently of each other, the inner nozzle (27) forms an inner tube (6a) which matches the narrowest cross section of the vacuum blowing mould, and the outer nozzle (28) has an inner diameter which is always greater than the outer diameter of the inner nozzle (27), wherein the outer tube (6b) for increasing the wall thickness of the inner tube (6a), which outer tube is extruded through the outer nozzle (28), is connected to the inner tube (6a) over its entire circumference on a defined longitudinal section to form the hollow finished article (34) only in the space under the nozzle openings (33) of the annular ducts (32, 33).

## Revendications

1. Procédé de fabrication d'articles finis (34) en forme de corps creux dans un matériau thermoplastique par aspiration et soufflage, comprenant un outil (8) constitué de deux moitiés de moule (7a,7b) déplaçables dans une position d'ouverture et dans une position de fermeture verrouillable, auquel au moins un tiroir (24,25) obturant la cavité d'article (20) est coordonné en dessous, qui fournit un dispositif d'aspiration (23) raccordé à l'outil (8) en dessous et au moins une tête de fourniture (2) d'un tuyau flexible d'ébauche (6) constitué de deux tuyaux flexibles en matière plastique (6a ;6b) disposés concentriquement l'un par rapport à l'autre, **caractérisé en ce que** la tête de fourniture (2) est pourvue de respectivement une buse (27) pour le tuyau flexible interne (6a) et une buse (28) pour le tuyau flexible externe (6b) comportant des embouchures de buse (3) concentriques l'une par rapport à l'autre de leurs canaux annulaires (31,32) et, pour chaque buse, des moyens de réglage (27a,28a) de fente de buse actionnables indépendamment l'un de l'autre pour commander l'épaisseur de paroi, la buse interne (27) forme un tuyau flexible interne (6a), qui est harmonisé à la section transversale la plus étroite du moule d'aspiration et soufflage et la buse externe (28) présente un diamètre interne, qui est constamment plus grand que le diamètre externe de la buse interne (27), moyennant quoi
juste à distance en dessous des embouchures de buse (33) des canaux annulaires (31,32), le tuyau flexible externe (6b) extrudé par la buse externe (28) est relié à des fins de renforcement de l'épaisseur de paroi du tuyau flexible interne (6a) sur toute sa circonférence totale sur une portion longitudinale déterminée avec le tuyau flexible interne (6a) en formant l'article fini (34) en forme de corps creux.
